# EUROPÄISCHE PATENTSCHRIFT

(11) **EP 4 339 500 B1**
(45) Veröffentlichungstag und Bekanntmachung des Hinweises auf die Patenterteilung: **15.07.2026**
(21) Anmeldenummer: 23215740.4
(22) Anmeldetag: 30.03.2022
(51) Int. Cl.: A61G 3/00, F16M 11/04, F16M 13/02, F16M 11/10, F16M 11/20

(54) **MECHANISCHE SCHNITTSTELLE FÜR MEDIZINISCHE GERÄTE UND AUSRÜSTUNGSGEGENSTÄNDE**
MECHANICAL INTERFACE FOR MEDICAL DEVICES AND EQUIPMENT
INTERFACE MÉCANIQUE POUR APPAREILS MÉDICAUX ET ÉQUIPEMENTS

(30) Priorität: 01.04.2021 DE 102021108459
(43) Veröffentlichungstag der Anmeldung: 20.03.2024
(62) Teilanmeldung aus: 22165297.7
(73) Patentinhaber: StarMed GmbH, 88719 Stetten (DE)
(72) Erfinder: Stern, René, 88719 Stetten am Bodensee (DE)
(74) Vertreter: DREISS Patentanwälte PartG mbB

(56) Entgegenhaltungen:
- CN-U- 211 094 749
- DE-A1- 102018 104 663
- DE-A1- 3 640 035
- DE-C1- 3 317 918
- DE-T2- 60 217 406
- DE-U1- 202010 009 667
- DE-U1- 202020 105 649
- JP-A- H0 978 324
- JP-A- H02 121 901
- US-A1- 2011 108 689

## Beschreibung

Im Bereich der medizinischen Versorgung von Patienten, sei es nach einem Unfall, z.B. in einem Rettungswagen, aber auch im Bereich der Intensivmedizin, werden je nach Verletzung oder Erkrankung des zu behandelnden Patienten verschiedene medizinische Geräte, z.B. zur Überwachung von Blutdruck, Herzschlag und/oder Atmung benötigt.

Dabei entscheiden Art und Schwere der Verletzung(en), welche Geräte und Ausrüstungsgegenstände benötigt werden. Darüber hinaus wird der Verletzte/ der Verwundete vom Ort des Unfalls bis in die Notaufnahme einer Klinik mit Hilfe verschiedener Transportmittel (Nato- oder Patiententrage; Rettungswagen, Hubschrauber, ...) transportiert. Während dieses Transportvorgangs müssen die zur Behandlung und Überwachung erforderlichen Geräte in unmittelbarer Nähe des Verletzten oder Verwundeten bleiben. Es ist selbstredend, dass diese Geräte teilweise empfindlich auf Stöße reagieren.

Insbesondere, wenn es um die Erstversorgung von verletzten oder verwundeten Personen geht, müssen die zur Behandlung des Verletzten/des Verwundeten erforderlichen Geräte an einer Patiententrage, an einem Kliniktransporter oder im Rettungswagen rasch und sicher lösbar befestigt werden können. Je nach Gerät und den Bedingungen vor Ort müssen die Geräte zusätzlich vor Erschütterungen bzw. harten Stößen geschützt werden.

DE 20 2020 105 649 U1 offenbart eine Gerätehaltevorrichtung, insbesondere zur Befestigung eines mobilen medizinischen Gerätes, und eine medizinische Vorrichtung.

Der Erfindung liegt die Aufgabe zugrunde, eine Lösung bereitzustellen, welche es erlaubt medizinischen Geräte oder andere technische Ausrüstungsgegenstände schnell, zuverlässig und sicher mit einer Basis zu verbinden. Das alles unter den herausfordernden Randbedingungen der Notfallmedizin.

Diese Aufgabe wird erfindungsgemäß gelöst durch eine mechanische Schnittstelle für medizinische Geräte und andere technische Ausrüstungsgegenstände, umfassend eine Aufnahme und ein lösbar mit der Aufnahme verbindbares Gegenstück, wobei die Aufnahme einen Auflagebereich und mehrere voneinander beabstandet angeordnete Aufnahmebolzen aufweist, wobei in dem Gegenstück Ausnehmungen ausgebildet und so angeordnet sind, dass die Aufnahmebolzen in die Ausnehmungen des Gegenstücks einfahren, wenn das Gegenstück auf dem Auflagebereich der Aufnahme abgesetzt wird.

Durch diese lösbare mechanische Schnittstelle ist es möglich, das Gegenstück mit seinen Ausnehmungen formschlüssig mit der Aufnahme bzw. deren Aufnahmebolzen zu verbinden, indem das Gegenstück mit seiner "Unterseite" so auf dem Auflagebereich der Aufnahme abgesetzt wird. Dann fahren die Aufnahmebolzen der Aufnahme in die Ausnehmungen des Gegenstücks ein. Damit ist eine formschlüssige Verbindung hergestellt und ein auf dem Gegenstück angeordnetes medizinisches Gerät oder ein anderer Ausrüstungsgegenstand ist fest mit der Aufnahme verbunden.

Wenn beispielsweise die Aufnahme in dem Innenraum eines Rettungsfahrzeugs neben dem Platz, an dem sich der Patient während des Transports befindet, können verschiedene medizinische Geräte je nach Notwendigkeit und Bedarf in der Nähe des Patienten positioniert werden, indem das gewünschte Gerät mit dem an ihm befestigten Gegenstück auf den Auflagebereich der Aufnahme aufgesetzt und mittels der die Aufnahmebolzen fixiert wird.

Die formschlüssige Verbindung über Aufnahmebolzen und Ausnehmungen im Gegenstück ist sehr schnell und einfach herstellbar und nach dem Einsatz des Geräts wieder lösbar. Sie kann ausreichend große Kräfte übertragen, so dass das auf dem Gegenstück befindliche medizinische Gerät unter allen Umständen gegen Verrutschen und/oder Herunterfallen gesichert ist.

Die Aufnahme der erfindungsgemäßen Schnittstelle kann mit Hilfe von Gewindeschrauben beispielsweise an einem Rettungsfahrzeug, einem Grundgestell eines Inkubators oder eines Kliniktransporters angeschraubt werden. Dann ragen die Aufnahmebolzen nach oben über den Aufnahmebereich hinaus und jedes medizinische Gerät, das auf einem erfindungsgemäßen Gegenstück ausgestattet ist, kann auf dem Auflagebereich aufgesetzt werden.

Wenn auch die Aufnahme flexibel an einem Fahrzeug oder einer anderen tragenden Struktur befestigt werden soll, sind in weiterer vorteilhafter Ausgestaltung der Erfindung auf einer dem Auflagebereich gegenüberliegenden Seite der Aufnahme zwei oder mehr voneinander beabstandete Fittings/Nutensteine angeordnet, die mit einer Zurrschiene kompatibel sind, wie sie aus der Luftfahrt und dem Transportwesen bekannt sind.

Diese Zurrschienen sind seit Jahren auf dem Markt. Sie sind häufig aus Aluminium hergestellt und weisen eine T-förmige Nut auf. An der Engstelle der T-förmigen Nut sind in regelmäßigen Abständen Erweiterungen ausgebildet, die in der Regel die Form eines Kreises aufweisen. Die Fittings, welche mit der Zurrschiene zusammenwirken, weisen in dem gleichen Abstand wie die Erweiterungen in der T-Nut der Zurrschiene runde Durchmessererweiterungen auf. Die Fittings können mit den Durchmessererweiterungen in die Erweiterungen in der T-Nut der Zurrschiene eingeführt werden, wenn sich die Durchmessererweiterungen der Fittings über Erweiterungen in der T-Nut befinden.

Wenn sich die Durchmessererweiterungen der Fittings in der T-Nut befinden und man dann die Fittings um einen halben Abstand zwischen den Erweiterungen in der T-Nut verschiebt, dann ergibt sich ein Formschluss zwischen den Fittings und der T-Nut, wie bei einem herkömmlichen Nutenstein und einer herkömmlichen T-Nut. Diese besonderen Positionen der Fittings in der Zurrschiene werden im Zusammenhang mit der Erfindung auch als "Formschluss-Position bezeichnet.

Ein Vorteil an diesen Zurrschienen und den zugehörigen Fittings besteht darin, dass die Fittings (und im Falle der erfindungsgemäßen Schnittstelle) die mit ihnen verbundene Aufnahme an verschiedenen Stellen der Zurrschiene formschlüssige befestigt werden können, ohne dass dazu Werkzeug benötigt wird.

Um sicherzustellen, dass die Fittings und mit ihr die Aufnahme sich nicht in unbeabsichtigter Weise relativ zu der Zurrschiene in eine Position bewegen können in der kein Formschluss besteht, ist an der Aufnahme ein (bevorzugt federnder) Rastbolzen vorgesehen. Dieser Rastbolzen fährt in ausgefedertem Zustand in eine der Erweiterungen in der T-Nut der Zurrschiene ein und sorgt auf diese Weise dafür, dass die die Aufnahme und mit ihr auch die Fittings in der gewünschten Formschluss-Position fixiert werden. Dadurch ist ein sicherer, extrem belastbarer und schnell lösbarer Formschluss zwischen den Fittings bzw. der Aufnahme und der Zurrschiene möglich. Das Prinzip dieser Zurrschienen ist, wie bereits erwähnt, aus der Luftfahrt zur Befestigung von Sitzen in Passagierflugzeugen, aber auch in der Logistikbranche bei Transportern oder Lkws zum flexiblen Befestigen von Zurrpunkten bekannt. Dieses System wird nun erfindungsgemäß im Zusammenhang mit einer mechanischen Schnittstelle für medizinische Geräte und Ausrüstungen eingesetzt, so dass dessen Vorteile auch für den medizinischen Bereich und insbesondere das Rettungswesen, aber auch Krankentransporte und die Intensivmedizin, erschlossen werden.

Damit die Kompatibilität der Aufnahme mit einer aus der Luftfahrtbranche bzw. dem Transportwesen bekannten Zurrschiene funktioniert, ist es erforderlich bzw. vorgesehen, dass die Fittings und der Rastbolzen miteinander fluchtend an der Aufnahme angeordnet sind. Dann nämlich ist es möglich, dass sowohl die Fittings mit ihren Durchmessererweiterungen in die Erweiterung der T-Nut der Zurrschiene eingeführt werden können und, nach dem Verfahren der Fittings bzw. der Aufnahme relativ zu der Zurrschiene der Rastbolzen immer dann in eine Erweiterung in der T-Nut der Zurrschiene einfahren kann, wenn sich die an der Aufnahme befestigten Fittings in einer Formschluß-Position befinden.

Es ist alternativ auch möglich, an der den Aufnahmebolzen gegenüberliegenden Seite Dämpfungselemente vorzusehen, die beispielsweise an einem Fahrzeugboden, einem Kliniktransporter oder auf einer Dämpfungsplatte angeschraubt werden. Die Dämpfungselemente mildern Stöße, die über das Fahrzeug oder die tragende Struktur, welche die mechanische Schnittstelle bzw. die Aufnahme trägt, eingeleitet werden. Dadurch werden die mechanischen Belastungen der auf der Aufnahme angeordneten medizinischen Geräte auch im rauen rettungs- oder intensivmedizinischen Einsatz geschont und ihre Lebensdauer wird verlängert bzw. die Gefahr von Funktionsstörungen der Geräte wird verringert.

Es ist alternativ möglich, die Dämpfungselemente auf einer Dämpfungsplatte einenends zu befestigen und anderenends die Aufnahme an den Dämpfungselementen zu befestigen. Solche Dämpfungselemente sind in verschiedenen Ausführungen, Dämpfungsraten und Federsteifigkeiten im Fachhandel erhältlich. Sie weisen an einem Ende häufig Gewindehülsen auf, so dass die Aufnahme auf einfache Weise an den Dämpfungselementen angeschraubt werden kann. Die Dämpfungselemente können an ihrem entgegengesetzten Ende eine Flanschplatte aufweisen. Mit der Flanschplatte können die Dämpfungselemente an dem Boden eines Fahrzeugs, einer tragenden Struktur oder einer Trägerplatte angeschraubt werden können. Wenn die Dämpfungselemente an einer Trägerplatte befestigt sind, dann ist es entweder möglich, diese Trägerplatte mit einem Fahrzeug oder einer tragenden Struktur zu verschrauben. Alternativ ist es auch möglich, an der Trägerplatte Fittings und einen federbelasteten Rastbolzen vorzusehen, so dass die Trägerplatte an einer Zurrschiene in der oben beschriebenen Weise befestigt werden kann.

In vorteilhafter Ausgestaltung der Erfindung weisen die Aufnahmebolzen jeweils eine Querbohrung auf. In diese Querbohrung kann ein Sperrbolzen, insbesondere ein Kugelsperrbolzen oder ein Federsplint eingesteckt werden. Damit wird das unbeabsichtigte Lösen bzw. Abheben des Gegenstücks von der Aufnahme verhindert. Das heißt, selbst wenn die Aufnahme "auf den Kopf" gedreht wird, bleibt das Gegenstück mit der Aufnahme formschlüssig verbunden.

Bei dieser Art des "doppelten" Formschlusses zwischen Gegenstück und Aufnahme kann die mechanische Schnittstelle Kräfte in alle Raum sicher übertragen, ohne dass es zu einem Lösen des Gegenstücks von der Aufnahme kommen kann.

Eine besonders elegante Umsetzung der erfindungsgemäßen Schnittstelle sieht vor, dass das Gegenstück mit den Ausnehmungen in das Gehäuse eines medizinischen Geräts integriert ist. Dann sind in der Regel auf der Unterseite des Gehäuses die Ausnehmungen vorhanden, wobei die Anordnung der Ausnehmungen derjenigen der Aufnahmebolzen entspricht. Wenn das Gerät auf die Aufnahme aufgesetzt wird, fahren die Aufnahmebolzen in die an der Unterseite des Gehäuses angeordneten Ausnehmungen ein. Um das Gerät bzw. das Gehäuse dann mit der Aufnahme zu verriegeln, sind an in der Vorderseite, der Rückseite oder an den Seiten des Gehäuses Öffnungen vorgesehen. Durch diese Öffnungen werden Sperrbolzen oder ein Federsplint in die Querbohrung der Aufnahmebolzen gesteckt.

Weitere Vorteile und vorteilhafte Ausgestaltungen der Erfindung sowie das Zusammenwirken der einzelnen Bauteile und Baugruppen in verschiedensten Konstellationen werden nachfolgend im Zusammenhang mit der Zeichnung dargestellt und erläutert.

### Zeichnung

Es zeigen:
- Figuren 1 und 2: Ausführungsformen erfindungsgemäßer Aufnahmen;
- Figur 3: eine Explosionsdarstellung eines ersten Anwendungsbeispiels der erfindungsgemäßen Schnittstelle;
- Figur 4: eine Trägerplatte mit Dämpfungselementen einem federbelasteten Rastbolzen und Stellplatten in einer Isometrie;
- Figur 5: eine isometrische Darstellung des zweiten Ausführungsbeispiels von unten;
- Figuren 6 und 7: das Ausführungsbeispiel gemäß der Figuren 3 und 4 in verschiedenen Ansichten;
- Figur 8: eine Seitenansicht des zweiten Ausführungsbeispiels;
- Figur 9: die Trägerplatte des zweiten Ausführungsbeispiels ohne Dämpferelemente und ohne Aufnahme, die auf einer Fläche aufgesetzt ist, in der sich eine Zurrschiene befindet;
- Figuren 10 bis 13: Beispiele verschiedener Gegenstücke, die mit einer Aufnahme der erfindungsgemäßen Schnittstelle kompatibel sind;
- Figur 14: das Gerät gemäß Figur 13, wie es auf einer Aufnahme gemäß dem ersten Ausführungsbeispiel montiert ist;
- Figur 15: das Gerät gemäß Figur 13, montiert auf der Aufnahme des zweiten Ausführungsbeispiels;
- Figur 16: ein weiteres Anwendungsbeispiel des zweiten Ausführungsbeispiels; und
- Figur 17: eine Aufnahme, die fest mit einem Inkubator verschraubt ist.

### Beschreibung der Ausführungsbeispiele

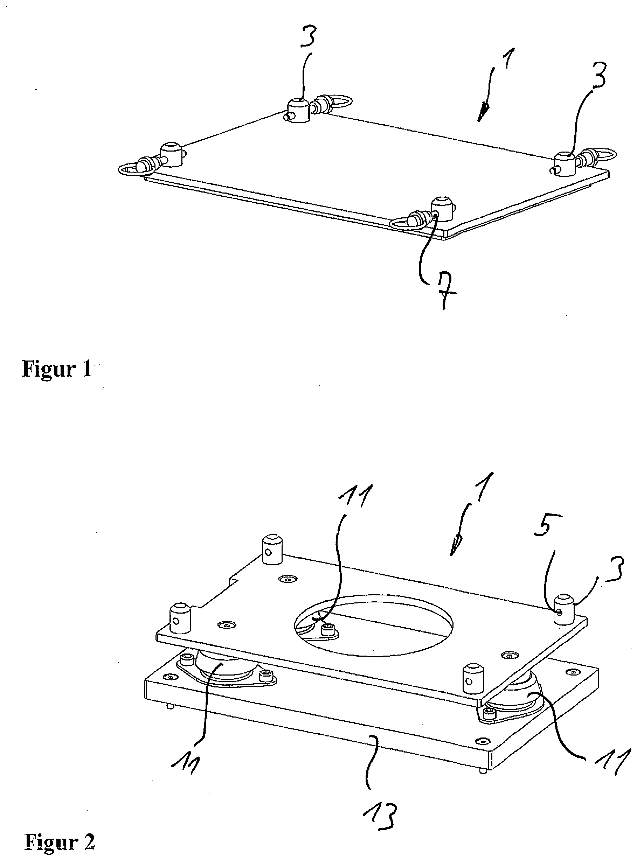

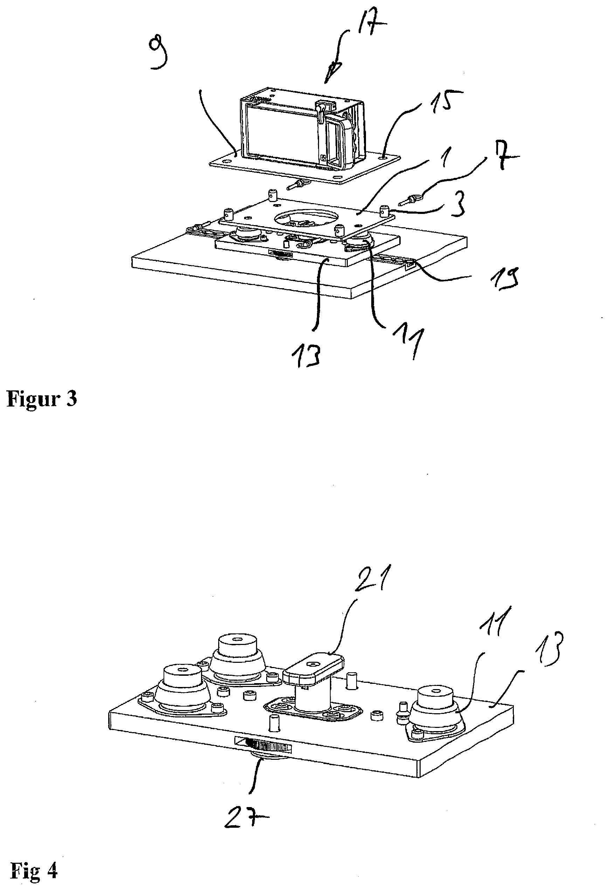

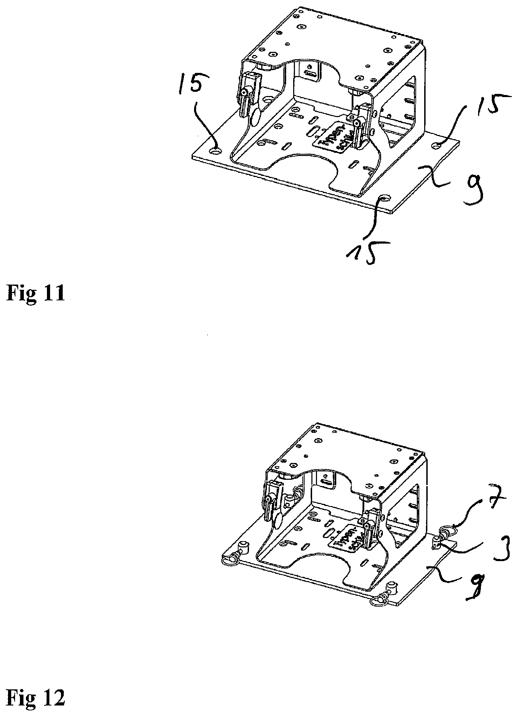

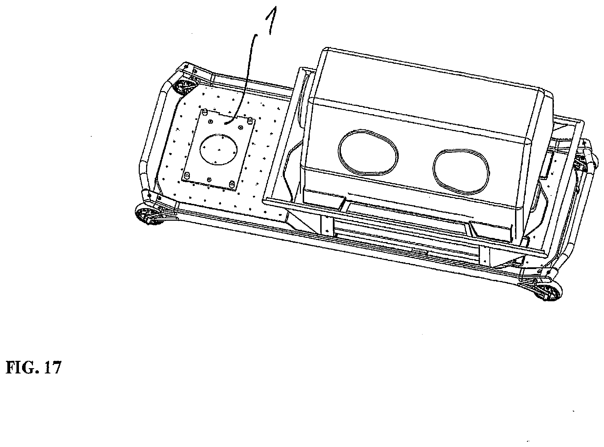

Die erfindungsgemäße Schnittstelle zeichnet sich durch eine große Flexibilität und einen breiten Anwendungsbereich aus. Daher können die Figuren jeweils nur eine beschränkte Zahl konkreter Konfiguration von Aufnahmen, Gegenstücken etc. darstellen. Es liegt in der Natur der Sache einer Schnittstelle, dass die verschiedenen Komponenten von Aufnahmen, Trägerplatten, Dämpfungselementen und Gegenstücken in einer nahezu unüberschaubaren Zahl von Konstellationen konfiguriert werden können. Eine detaillierte Beschreibung aller d Konfigurationen ist nicht möglich, so dass die in den Figuren 1 bis 17 dargestellten Konstellationen lediglich der Erläuterung dienen, nicht aber dem Einsatzbereich und Anwendungsbereich der erfindungsgemäßen Schnittstelle beschränken sollen. Die erfindungsgemäße Schnittstelle umfasst eine Aufnahme und ein damit zusammenwirkendes Gegenstück. Ein solches Gegenstück ist beispielsweise in der Figur 3 dargestellt.

In der Figur 1 ist eine Isometrie des ersten Ausführungsbeispiels einer erfindungsgemäßen Aufnahme 1 dargestellt. Das Gegenstück zu der Aufnahme 1 ist in der Figur 1 nicht dargestellt.

Die in der Figur 1 dargestellte Aufnahme 1 kann eine rechteckige Platte aus Blech oder Kunststoff sein, an deren Ecken vier Aufnahmebolzen 3 eingeschraubt oder auf andere Art befestigt sind. Aus Gründen der Übersichtlichkeit sind nicht alle Aufnahmebolzen 3 mit Bezugszeichen versehen. Die Aufnahmebolzen 3 weisen eine Querbohrung 5 auf (siehe Figur 2). Die Querbohrung 5 dient dazu, einen Sperrbolzen 7 aufzunehmen, so dass eine formschlüssige Verbindung, die durch die Aufnahmebolzen 3 und ein Gegenstück 9, wie es beispielsweise in der Figur 3 dargestellt ist, zu verriegeln bzw. zu sichern.

Das Zusammenwirken von Gegenstück 9 und der Aufnahme 1 wird nachfolgend noch im Detail dargestellt und erläutert.

Die Oberseite (in der Figur 1) der der Aufnahme 1 wird nachfolgend auch als Aufnahmebereich bezeichnet. Auf dem Aufnahmebereich wird das Gegenstück 9 aufgesetzt. Wenn das Gegenstück 9 auf der Aufnahme 1 abgesetzt wird, fahren die Aufnahmebolzen 3 in die Ausnehmungen 15 im Gegenstück 9 (siehe Figur 3) ein, bis die Querbohrungen 5 oben aus dem Gegenstück 9 herausragen. In dieser Position können dann die Sperrbolzen 7 in die Querbohrungen 5 eingeschoben werden. Dadurch wird die die formschlüssige Verbindung zwischen Gegenstück 9 und Aufnahme 1 verriegelt bzw. gesichert.

Das Ausführungsbeispiel in Figur 1 gezeigte Ausführungsbeispiel einer Aufnahme 1 kann beispielsweise mit Hilfe von Zylinderschrauben (nicht dargestellt) an einem Fahrzeug oder einer anderen tragenden Struktur festgeschraubt werden. Damit stellt die Aufnahme 1 einen Fixpunkt dar, auf dem bei Bedarf verschiedene medizinische Geräte, die mit einem erfindungsgemäßen Gegenstück 9 ausgestattet sind, befestigt werden können. wenn an der Aufnahme 1 ein anderes Gerät angedockt werden soll, wird die Schnittstelle gelöst, indem die Sperrbolzen abgezogen werden und das Gegenstück 9 samt dem darauf befindlichen Gerät abgehoben. Anschließend wird ein anderes Gerät mit Gegenstück 9 auf der Aufnahme 1 abgesetzt. Dieser Vorgang dauert nur wenige Sekunden. Daher bietet die erfindungsgemäße Schnittstelle eine große Flexibilität bei gleichzeitig hoher mechanischer Belastbarkeit und hoher Ausfallsicherheit.

In der Figur 3 ist in einer Explosionsdarstellung eine Konfiguration dargestellt, bei der das Gegenstück 9 als Platte mit vier Ausnehmungen 15 ausgebildet ist. Auf dem Gegenstück 9 ist ein medizinisches Gerät 17 befestigt, so dass durch das Aufsetzen des Gegenstücks 9 auf der darunterliegenden Aufnahme 1 die Aufnahmebolzen 3 durch die Ausnehmungen 15 eintauchen und schließlich die Querbohrungen 5 der Aufnahmebolzen 3 oben aus dem Gegenstück herausragen. In dieser Position ist es dann möglich, die Sperrbolzen 7 in die Querbohrungen 5 einzuführen und dadurch das Gegenstück 9 und mit ihm das darauf befestigte medizinische Gerät 17 formschlüssig, fest und extrem belastbar mit der Aufnahme 1 zu verbinden.

Wenn das Gerät, welches mittels eines Gegenstücks 9 auf der Aufnahme 1 der erfindungsgemäßen Schnittstelle abgesetzt werden soll, sehr empfindlich ist und/oder die tragende Struktur, welche die Aufnahme 1 trägt bzw. das Fahrzeug, an dem die Aufnahme 1 befestigt ist, Stöße in die Aufnahme 1 einleitet, ist es vorteilhaft, wenn die Aufnahme 1 über Dämpfungselemente 11 mit der tragenden Struktur oder einer Trägerplatte 13, wie in der Figur 2 dargestellt, gekoppelt ist. Die Trägerplatte 13 kann wiederum mit Schrauben an der nicht sichtbaren tragenden Struktur oder einem Fahrzeug angeschraubt werden. Die Dämpfungselemente, die zwischen der Trägerplatte 13 und der Aufnahme 1 angeordnet sind, dämpfen Stöße, die von der Trägerplatte 13 ausgehen und ihre Amplitude wird kleiner, so dass die mechanischen Belastungen eines Geräts, welches über die mechanische Schnittstelle mit dem Fahrzeug verbunden ist, kleiner werden.

Bei dem in der Figur 3 dargestellten Ausführungsbeispiel wird die Trägerplatte 13 nicht, wie in Figur 2, durch Schrauben, sondern mit Hilfe von Fittings und einem Rastbolzen formschlüssig an einer Zurrschiene 19 festgelegt.

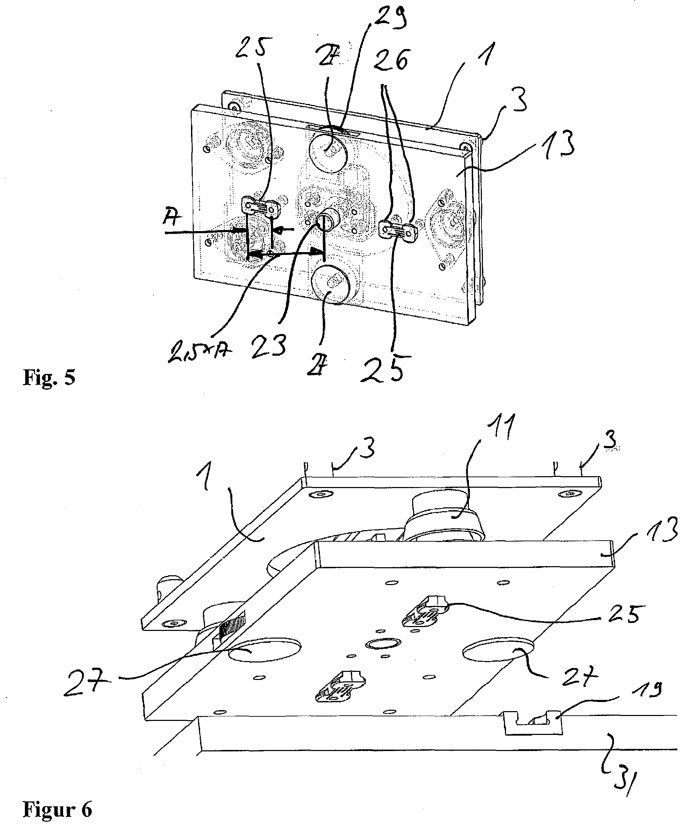

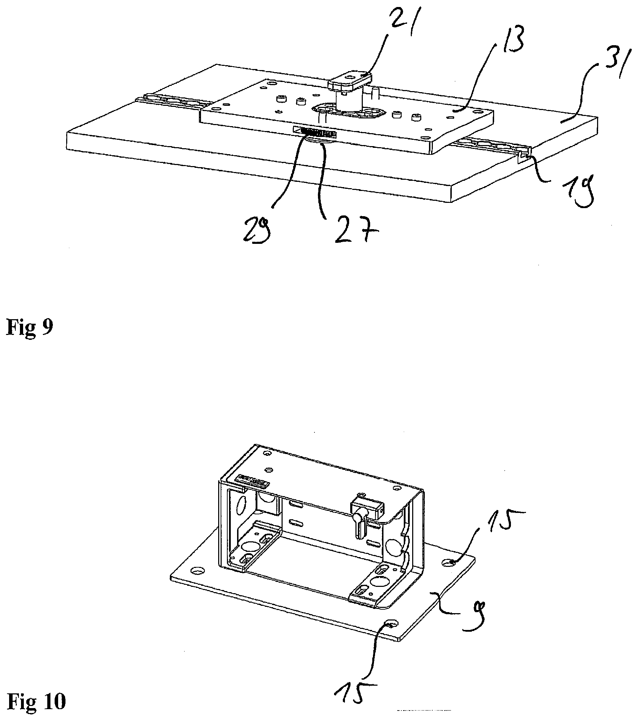

Die Zurrschiene 19 ist auch in den Figuren 6 und 9 sichtbar. Das Prinzip dieser Zurrschiene 19 besteht darin, dass in einem Strangpressprofil, zumeist aus Aluminium, eine T-Nut ausgebildet ist. In regelmäßigen Abständen (entsprechend dem Maß "A" in Figur 5) sind an der T-Nut Erweiterungen ausgebildet, meistens mit einer kreisförmigen Außenkontur. Durch komplementär geformte Fittings, die kreisrunde Durchmessererweiterungen aufweisen, deren Abstand "A" in der Figur 5 eingetragen ist. Wenn die Durchmessererweiterungen der Fittings 25 sich direkt über den Erweiterungen der T-Nut befinden, können Durchmessererweiterungen der Fittings 25 durch die Erweiterungen in der T-Nut in diese eingeführt werden. Wenn anschließend die Fittings 25 um einen halben Abstand (= 0,5 x "A") in der T-Nut verschoben werden, dann besteht zwischen der T-Nut der Zurrschiene und den Durchmessererweiterungen ein Formschluss, ähnlich wie bei einem herkömmlichen Nutenstein und einer T-Nut. In dieser Formschluß-Position des oder der Fittings 25 ist es nicht möglich, das Fitting aus der T-Nut herauszuziehen. Das ist erst wieder möglich, wenn das Fitting um den halben Abstand "A" relativ zu der Zurrschiene bewegt wird.

### xx

Um dies zu verhindern, ist zwischen den Fittings ein Rastbolzen 23 vorhanden. Der Rastbolzen 23 hat ein zylindrisches Endteil, dessen Durchmesser dem Durchmesser der Erweiterungen in der T-Nut der Zurrschiene 19 entspricht. Wenn das Ende des Rastbolzens 23 in eine Erweiterung der T-Nut einfährt, dann ist sichergestellt, dass die Trägerplatte 13 und die an der Trägerplatte 13 befestigten Fittings 25 sich nicht relativ zu der Zurrschiene 19 bewegen können. kann. Infolgedessen ist der Formschluss zwischen den Durchmessererweiterungen des Fittings und der T-Nut der Zurrschiene gewährleistet und es ist eine sehr belastbare und in verschiedenen Positionen formschlüssige Verbindung in an sich bekannter Weise hergestellt. Weil das System einer solchen Zurrschiene mit den entsprechenden Fittings dem Fachmann bereits bekannt ist, wird auf die Details dieses Systems nicht näher eingegangen.

In der Figur 4 ist eine Isometrie eines weiteren Ausführungsbeispiels der Trägerplatte 13 samt Dämpfungselementen 11 dargestellt. Die Aufnahme 1 ist nicht dargestellt. Insbesondere ist auch ein Griffelement 21 des federbelasteten Rastbolzens 23 zu erkennen. Die Figur 5 zeigt eine Isometrie der Unterseite der Trägerplatte 13. In dieser Ansicht ist das das andere Ende des federbelasteten Rastbolzens 23 zu sehen. Das Griffelement 21 gehört zu dem Rastbolzen 23.

Außerdem sind in der Figur 5 zwei Fittings 25 zu sehen, die an der Unterseite der Trägerplatte 13 angeschraubt sind. In der Figur 4 sind die zugehörigen Schraubenköpfe an der Oberseite der Trägerplatte 13 sichtbar.

Die in der Figur 5 exemplarisch dargestellten Fittings 25 sind längliche Körper, die in einem Abstand A zwei mehr oder weniger kreisförmige Durchmessererweiterungen aufweisen. Der Abstand A der Durchmessererweiterungen 26 ist auf eine nicht dargestellte Zurrschiene 16 abgestimmt, die im gleichen Abstand Erweiterungen in der T-Nut aufweist.

Der Abstand zwischen den beiden Fittings 25 entspricht einem ganzen Vielfachen des Abstands A zwischen den Durchmessererweiterungen. In der Mitte zwischen den Fittings 25 ist bei diesem Ausführungsbeispiel der Rastbolzen 23 angeordnet. Der Mittelpunkt des Rastbolzens 23 ist um EINEN halben Abstand "A" versetzt zu einem ganzen Vielfachen von "A". Bei diesem Ausführungsbeispiel ist der Abstand zwischen dem Mittelpunkt des Rastbolzens 23 und der ersten Durchmessererweiterung des Fittings 25 gleich 2,5 x A.

Anders ausgedrückt: Wenn der Rastbolzen 23 in einer Erweiterung der T-Nut eingefahren ist, dann befinden sich die Durchmessererweiterungen 26 an den Fittings 25 an einem Ort der Zurrschiene 19, wo keine Erweiterung der T-Nut vorhanden ist. Infolgedessen ist ein Formschluss zwischen den Fittings 25 und der Zurrschiene 19 in dieser Position gewährleistet.

Um diesen Formschluss aufheben zu können, muss der Rastbolzen 23 mit Hilfe des Griffelements 21 gegen die Kraft einer Feder angehoben werden, so dass der Rastbolzen 23 in der Trägerplatte 13 verschwindet. Dann ist es möglich, die Trägerplatte 13 samt den Fittings 25 relativ zu der Zurrschiene 19 um 0,5 x A zu verschieben. Dann befinden sich die Durchmessererweiterungen 26 der Fittings 25 genau dort, wo in der Zurrschiene die Erweiterungen sind und die Trägerplatte 13 samt der Fittings 25 und alle mit der Trägerplatte 13 verbundenen Bauteile können aus der Zurrschiene 19 herausgehoben werden.

In den Figuren 4 und sind an der Unterseite der Trägerplatte 13 Stellplatten 27 zu erkennen. Die Stellplatten 27 werden bei diesem Ausführungsbeispiel über eine Rändelmutter 29 mehr oder weniger weit nach unten bewegt. Die Stellplatte 27 funktioniert in etwa so wie ein höhenverstellbarer Maschinenfuß.

Wenn die Oberkante der Zurrschiene 19 nicht flächenbündig mit der Oberfläche einer tragenden Struktur 29, welche die Zurrschiene 19 aufnimmt, verläuft (siehe Figuren 6 und 9), dann würde die Trägerplatte 13 "kippeln", wenn die Fittings 25 formschlüssig mit der Zurrschiene 19 verbunden sind.

Um das zu verhindern sind die Stellplatten 27 vorgesehen. Sie gleichen den "Höhenunterschied" zwischen der Oberkante der Zurrschiene 19 und der Oberfläche der tragenden Struktur 29 auszugleichen. Dazu werden die Stellplatten 27 mit Hilfe der Rändelmutter 29 in der Figur 5 nach unten herausgedreht, bis sie auf der Oberfläche der tragenden Struktur 29 aufliegen und somit eine sichere und spielfreie Verbindung zwischen der Trägerplatte 13 und der tragenden Struktur 29 hergestellt ist.

Es ist in einer vereinfachten Ausführungsform auch möglich, dass nur eine Stellplatte 27 und eine Rändelmutter 29 vorgesehen ist. Auch dann ist es möglich, die Trägerplatte 13 spielfrei an der tragenden Struktur 29 mit Hilfe der Zurrschiene 19 zu befestigen.

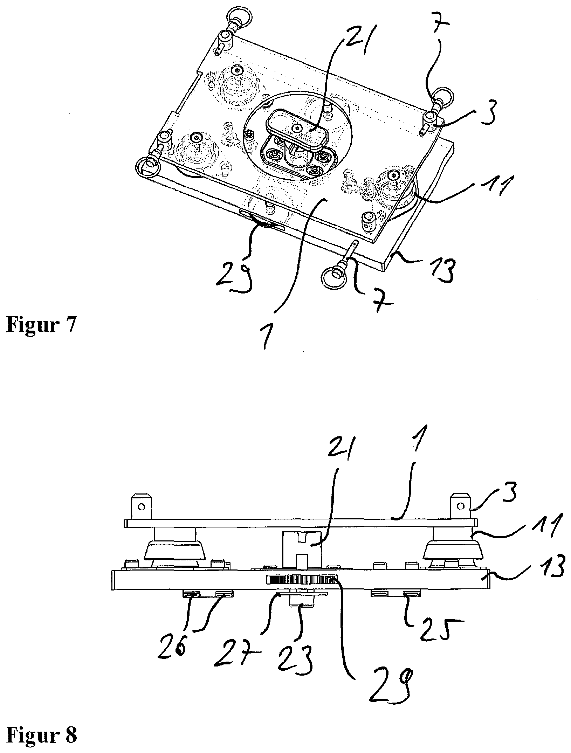

In der Figur 7 ist das anhand der Figuren 3 und 4 erläuterte Ausführungsbeispiel mit aufgesetzter Aufnahme 1 dargestellt. In dieser Darstellung ist gut zu erkennen, dass die Aufnahme 1 an den drei Dämpfungselementen 11 befestigt ist und die Aufnahmebolzen 3 der Aufnahme 1 sich auf der "anderen Seite" der Dämpfungselemente von der Aufnahme 1 befinden, wie die Dämpfungselemente 11. In der Aufnahme ist eine große zentrale Aussparung vorhanden. Durch diese Aussparung kann man das Griffelement 21 gut greifen und betätigen.

Die Figur 8 zeigt eine Seitenansicht dieses Ausführungsbeispiels. In dieser Seitenansicht sind die Aufnahme 1 mit den Aufnahmebolzen 3, die Dämpfungselemente 11, die Fittings 25, die Stellplatte 27 mit der Rändelmutter 29 und der Rastbolzen 23 zu erkennen.

In der Figur 9 ist die Trägerplatte 13 ohne Dämpfungselemente 11 und ohne Aufnahme 1 dargestellt, wobei die Trägerplatte 13 mit den Fittings 25 formschlüssig in der Zurrschiene 19 aufgenommen ist.

In den Figuren 10 bis 13 sind verschiedene Ausführungsformen von Gegenstücken 9 dargestellt. Bei den Figuren 10 bis 12 sind auf einem Gegenstück 9 jeweils verschiedene Gehäuse angeordnet. In jedes dieser Gehäuse kann ein spezifisches medizinisches Gerät (nicht dargestellt) eingesetzt werden. Sobald sich dieses Gerät in dem spezifischen Gehäuse auf dem Gegenstück 9 befindet, kann es mit Hilfe des Gegenstücks 9 an der Aufnahme 1 formschlüssig befestigt werden.

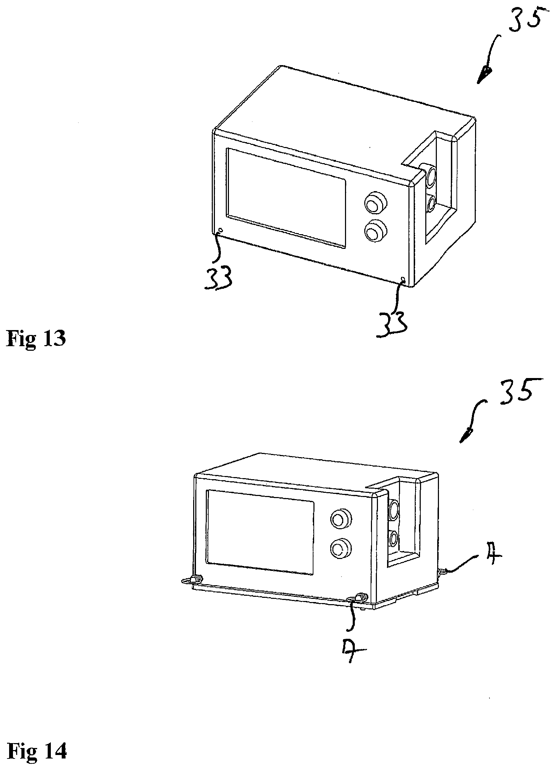

In der Figur 13 ist ein medizinisches Gerät 35 dargestellt, bei dem das Gegenstück in das Gehäuse des Geräts 35 integriert ist. Das bedeutet, dass auf der Unterseite des Geräts 35 Ausnehmungen vorhanden sind, in welche die Aufnahmebolzen 3 einfahren. An der Vorderseite des Geräts sind zwei kleine Öffnungen 33 sichtbar. Durch diese Öffnungen 33 werden die Sperrbolzen 7 eingeführt und auf diese Weise das medizinische Gerät 35 mit den Aufnahmebolzen der Aufnahme 1 verbunden. Diese Situation ist in der Figur 14 noch etwas anschaulicher dargestellt. Hier ist das medizinische Gerät auf der Aufnahme 1 gemäß Figur 1 aufgesetzt und die Sperrbolzen 7 sind eingeschoben.

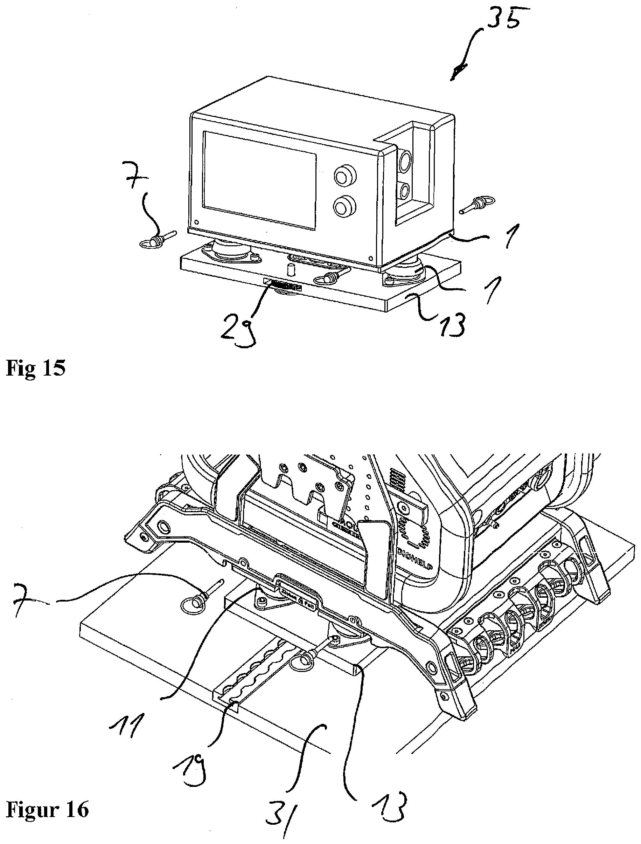

In der Figur 15 ist das gleiche medizinische Gerät 35 mit Aufnahme 1, Dämpfungselementen 11 und Trägerplatte 13 dargestellt. In der Figur 16 ist dieses Ausführungsbeispiel nochmals mit einem anderen medizinischen Gerät ausgerüstet.

### Bezugszeichenliste

1 Aufnahme
3 Aufnahmebolzen
5 Querbohrung
7 Sperrbolzen
9 Gegenstück
11 Dämpfungselement
13 Trägerplatte
13 Trägerplatte
15 Ausnehmung im Gegenstück
17 Medizinisches Gerät oder Ausrüstungsgegenstand
19 Zurrschiene
21 Griffelement
23 Rastbolzen
25 Fitting
27 Stellplatte
29 Rändelmutter
31 Tragstruktur
33 Öffnung
35 Gerät

## Patentansprüche

1. Mechanische Schnittstelle für medizinische Geräte (35) und andere Ausrüstungsgegenstände umfassend eine Aufnahme (1) und ein lösbar mit der Aufnahme (1) verbindbares Gegenstück (9), wobei die Aufnahme (1) einen Auflagebereich und mehrere voneinander beanstandet angeordnete Aufnahmebolzen (5) aufweist, wobei in dem Gegenstück (9) komplementär zu den Aufnahmebolzen (5) angeordnete Ausnehmungen (15) ausgebildet sind, so dass die Aufnahmebolzen (5) in die Ausnehmungen (15) des Gegenstücks (9) einfahren, wenn sich das Gegenstück (9) auf dem Auflagebereich der Aufnahme (1) befindet, **dadurch gekennzeichnet, dass** auf einer dem Auflagebereich gegenüberliegenden Seite der Aufnahme (1) zwei voneinander beanstandete Fittings/Nutensteine (25) angeordnet sind, dass die Fittings/Nutensteine (25) mit einer Zurrschiene (19) kompatibel sind, und dass an der Aufnahme (1) ein (federnder) Rastbolzen (23) vorgesehen ist und, dass auf einer dem Auflagebereich gegenüberliegenden Seite der Aufnahme (1) eine Trägerplatte (13) vorgesehen ist, und dass zwischen der Aufnahme (1) und der Trägerplatte (13) mindestens ein Dämpfungselement (11), bevorzugt aber drei Dämpfungselemente (11), vorgesehen sind, und dass die Fittings/Nutensteine (25) sowie der (federnde) Rastbolzen (23) an der Trägerplatte (13) angeordnet sind.

2. Schnittstelle nach Anspruch 1, **dadurch gekennzeichnet, dass** die Fittings/Nutensteine (25) und der Rastbolzen (23) miteinander fluchtend an der Aufnahme (1) oder der Trägerplatte (13) angeordnet sind.

3. Schnittstelle nach einem der vorhergehenden Ansprüche, **dadurch gekennzeichnet, dass** an der Aufnahme (1) oder der Trägerplatte (13) mindestens eine höhenverstellbare Ausgleichsplatte (27) angeordnet sind, und dass die mindestens eine Ausgleichsplatte (27) in einem Abstand (S) von einer gedachten Verbindungslinie zwischen den Fittings/Nutensteinen (25) positioniert ist.

4. Schnittstelle nach einem der vorhergehenden Ansprüche, **dadurch gekennzeichnet, dass** die Aufnahmebolzen (3) eine Querbohrung (5) aufweisen, und dass in die Querbohrung (5) ein Sperrbolzen, bevorzugt ein Kugelsperrbolzen (7), oder ein Federsplint einsteckbar ist, um die formschlüssige Verbindung zwischen Aufnahmebolzen (3) und Ausnehmung zu verriegeln/zu sichern.

5. Schnittstelle nach einem der vorhergehenden Ansprüche, **dadurch gekennzeichnet, dass** das Gegenstück in ein Gehäuse eines medizinischen Geräts (35) oder eines Ausrüstungsgegenstands integriert oder an ihm befestigt ist.

## Claims

1. A mechanical interface for medical apparatuses (35) and other equipment, comprising a receptacle (1) and a counterpart (9) which is releasably connectable to the receptacle (1), the receptacle (1) having a support region and a plurality of spaced-apart receptacle bolts (5), cut-outs (15) arranged so as to be complementary to the receptacle bolts (5) being formed in the counterpart (9), such that the receptacle bolts (5) enter the cut-outs (15) of the counterpart (9) when the counterpart (9) is located on the support region of the receptacle (1), **characterized in that** on a side of the receptacle (1) opposite the support region, two fittings/slot nuts (25) are arranged which are spaced apart from one another, **in that** the fittings/slot nuts (25) are compatible with a lashing rail (19), and **in that** a (resilient) stop bolt (23) is provided on the receptacle (1), and **in that** a carrier plate (13) is provided on a side of the receptacle (1) opposite the support region, and **in that** at least one damping element (11), preferably three damping elements (11), are provided between the receptacle (1) and the carrier plate (13), and that the fittings/slot nuts (25) and the (resilient) stop bolt (23) are arranged on the carrier plate (13).

2. The interface according to claim 1, **characterized in that** the fittings/slot nuts (25) and the stop bolt (23) are arranged in alignment with one another on the receptacle (1) or the carrier plate (13).

3. Interface according to any of the preceding claims, **characterized in that** at least one height-adjustable compensating plate (27) is arranged on the receptacle (1) or the carrier plate (13), and **in that** the at least one compensating plate (27) is positioned at a distance (S) from an imaginary connecting line between the fittings/slot nuts (25).

4. The interface according to any of the preceding claims, **characterized in that** the receptacle bolts (3) have a transverse bore (5), and **in that** a locking pin, preferably a quick release pin (7), or a spring split pin can be inserted into the transverse bore (5) in order to lock/secure the interlocking connection between the receptacle bolt (3) and the cut-out.

5. The interface according to any of the preceding claims, **characterized in that** the counterpart is integrated into or fastened to a housing of a medical apparatus (35) or piece of equipment.

## Revendications

1. Interface mécanique pour appareils médicaux (35) et autres objets d'équipement comprenant un réceptacle (1) et une contre-pièce (9) pouvant être reliée de manière amovible au réceptacle (1), dans laquelle le réceptacle (1) présente une zone d'appui et plusieurs boulons de réceptacle (5) disposés à distance les uns des autres, dans laquelle des évidements (15) disposés de manière complémentaire aux boulons de réceptacle (5) sont réalisés dans la contre-pièce (9), de sorte que les boulons de réceptacle (5) pénètrent dans les évidements (15) de la contre-pièce (9) lorsque la contre-pièce (9) se trouve sur la zone d'appui du réceptacle (1), **caractérisée en ce que** deux raccords/écrous (25) espacés l'un de l'autre sont disposés sur un côté du réceptacle (1) opposé à la zone d'appui, **en ce que** les raccords/écrous (25) sont compatibles avec un rail d'arrimage (19), et **en ce qu'**un boulon d'arrêt (élastique) (23) est prévu sur le réceptacle (1) et **en ce qu'**une plaque de support (13) est prévue sur un côté du réceptacle (1) opposé à la zone d'appui, et **en ce qu'**au moins un élément d'amortissement (11), mais de préférence trois éléments d'amortissement (11), sont prévus entre le réceptacle (1) et la plaque de support (13), et **en ce que** les raccords/écrous (25) ainsi que le boulon d'arrêt (élastique) (23) sont disposés sur la plaque de support (13).

2. Interface selon la revendication 1, **caractérisée en ce que** les raccords/écrous (25) et le boulon d'arrêt (23) sont disposés en alignement les uns avec les autres sur le réceptacle (1) ou la plaque de support (13).

3. Interface selon l'une des revendications précédentes, **caractérisée en ce qu'**au moins une plaque de compensation (27) réglable en hauteur est disposée sur le réceptacle (1) ou la plaque de support (13), et **en ce que** l'au moins une plaque de compensation (27) est positionnée à une certaine distance (S) d'une ligne de liaison imaginaire entre les raccords/écrous (25).

4. Interface selon l'une des revendications précédentes, **caractérisée en ce que** les boulons de réceptacle (3) présentent un alésage transversal (5), et **en ce qu'**un boulon de blocage, de préférence un boulon de blocage à bille (7), ou une goupille élastique peut être inséré dans l'alésage transversal (5) pour verrouiller/maintenir la liaison par complémentarité de forme entre le boulon de réceptacle (3) et l'évidement.

5. Interface selon l'une des revendications précédentes, **caractérisée en ce que** la contre-pièce est intégrée dans un boîtier d'un appareil médical (35) ou d'un objet d'équipement ou est fixée à celui-ci.
